# FASCICULE DE BREVET EUROPEEN

(11) **EP 3 588 729 B1**
(45) Date de publication et mention de la délivrance du brevet: **09.12.2020**
(21) Numéro de dépôt: 19181043.1
(22) Date de dépôt: 18.06.2019
(51) Int. Cl.: H02J 3/38, B64C 25/40, B64D 13/06, B64D 33/00

(54) **ARCHITECTURE ÉLECTRIQUE D'AÉRONEF, AÉRONEF COMPRENANT L'ARCHITECTURE ET PROCÉDÉ DE FONCTIONNEMENT DE L'ARCHITECTURE**
ELEKTRISCHE ARCHITEKTUR FÜR LUFTFAHRZEUG, DIESE ARCHITEKTUR UMFASSENDES LUFTFAHRZEUG UND FUNKTIONSVERFAHREN DER ARCHITEKTUR
ELECTRICAL ARCHITECTURE OF AN AIRCRAFT, AIRCRAFT COMPRISING THE ARCHITECTURE AND OPERATING METHOD OF THE ARCHITECTURE

(30) Priorité: 22.06.2018 FR 1800653
(43) Date de publication de la demande: 01.01.2020
(73) Titulaire: Thales, 92400 Courbevoie (FR)
(72) Inventeur: LACAUX, Frédéric, 78401 CHATOU (FR); GUGUEN, Stéphane, 78401 CHATOU (FR); MAALOUF, Amira, 78401 CHATOU (FR)
(74) Mandataire: Marks & Clerk France

(56) Documents cités:
- US-A1- 2007 262 644
- US-A1- 2007 284 480
- US-A1- 2010 026 089
- US-A1- 2013 229 053

## Description

L'invention concerne une architecture d'aéronef, un aéronef comprenant l'architecture et un procédé de fonctionnement de l'architecture.

Dans le domaine aéronautique, la tendance actuelle est d'augmenter le nombre d'équipements électriques et donc la puissance électrique embarquée. Un avion comprend généralement un grand nombre de charges électriques alimentées en puissance électrique par un réseau de fourniture électrique de bord, par exemple, les systèmes de climatisation et les machines électriques permettant de démarrer les moteurs principaux de l'avion. Ces charges mettent en œuvre principalement des machines électriques alternatives polyphasées. L'énergie électrique fournie à ces machines provient de convertisseurs de puissance reliés à un réseau de bord délivrant de l'énergie électrique sous forme continue ou alternative. Le réseau de bord peut comprendre par exemple des générateurs électriques, des batteries de stockage, ou encore des moyens de liaison à un réseau d'alimentation électrique externe à l'avion et permettant l'alimentation électrique de l'avion lorsqu'il est stationné dans un aéroport. De façon courante à bord d'avion, on trouve des réseaux continus 540V et/ou des réseaux alternatifs 115V ou 230V 400Hz.

Les équipements embarqués sont de nature très variée et leur consommation énergétique est très variable dans le temps. A titre d'exemple, les systèmes de climatisation sont en fonctionnement quasi continu alors que les machines électriques permettant de démarrer les moteurs principaux ne fonctionnent qu'avant le décollage et durant un laps de temps très court.

Les convertisseurs de puissance reçoivent de l'énergie du réseau de bord pour la convertir en énergie alternative polyphasée adaptée aux exigences en puissance et en fréquence de la charge. Cette adaptation entre les convertisseurs et les charges entraine souvent la réalisation de convertisseurs dédiés aux charges.

On a cherché à mutualiser les convertisseurs lorsque les charges associées ne fonctionnent pas simultanément. Cependant les systèmes de climatisation doivent fonctionner en permanence et en première approche, il ne parait pas possible d'interrompre leur fonctionnement en utilisant les convertisseurs associés pour d'autres charges. De plus, pour mutualiser un convertisseur, il est préférable que les charges différentes que l'on peut alimenter par ce convertisseur consomment des puissances voisines. En effet, lorsque plusieurs charges sont associées à un même convertisseur, il est nécessaire de dimensionner le convertisseur en fonction de la charge consommant le plus de puissance. Le document WO 2018/024983 A1 décrit un avion possédant deux générateurs et deux groupes de climatisation. Pour chaque groupe de climatisation le compresseur est à double bobinage. Afin d'équilibrer la puissance générée par les deux générateurs, chaque générateur alimente un bobinage de chaque compresseur.

Le document US 2006/0043922 A1 décrit la mise en parallèle de deux onduleurs déphases de 180°.

Le document WO 2010/067021 A2 décrit une machine électrique a plusieurs groupes d'enroulements connectés en étoile, chaque groupe étant alimenté par un onduleur.

Le document EP 3 190 282 A1 décrit une architecture électrique d'un avion possédant deux électroniques de puissance recevant chacune de la puissance d'un réseau de bord. Les électroniques de puissances sont des convertisseurs. Chaque électronique de puissance permet d'alimenter en parallèle un démarreur d'un moteur de propulsion et un compresseur d'un groupe de réfrigération. Les compresseurs sont alimentés de façon continue et les deux électroniques de puissances fonctionnent indépendamment l'une de l'autre.

Le document US 2007/284480 A1 décrit un système de distribution d'énergie électrique ayant des générateurs à courant alternatif. Le système comprend un premier moteur, un deuxième moteur et une unité d'alimentation auxiliaire. Les premier et deuxième générateurs AC sont couplés de manière opérationnelle au premier moteur, les troisième et quatrième générateurs AC sont couplés de manière opérationnelle au deuxième moteur, et les cinquième et sixième générateurs AC sont couplés de manière fonctionnelle à l'unité d'alimentation auxiliaire. Des systèmes de climatisation sont alimentés au moyen d'onduleurs correspondants, et les onduleurs servent également à démarrer les moteurs.

D'autres systèmes de distribution d'énergie pour les avions sont connus d'après les documents US 2007/262644 A1, US 2010/026089 A1 et US 2013/229053 A1.

L'invention a pour but de mutualiser des convertisseurs afin de les utiliser pour des charges dissemblables, notamment le système de climatisation et les machines électriques assurant le démarrage des moteurs principaux. L'invention peut être mise en œuvre dans tout type d'aéronef possédant plusieurs convertisseurs.

A cet effet, l'invention a pour objet une architecture électrique d'un aéronef comprenant deux systèmes de climatisation, deux convertisseurs destinés chacun à alimenter un des systèmes de climatisation et au moins une première machine électrique assurant le démarrage d'un premier moteur principal de l'aéronef. Selon l'invention, l'architecture électrique est configurée pour que les deux convertisseurs puissent alimenter conjointement la première machine électrique.

Selon l'invention, chacun des deux convertisseurs comprend au moins deux onduleurs ; l'architecture comprend en outre un coupleur permettant d'associer au moins deux premiers des onduleurs ; la machine électrique comprend un enroulement principal pouvant être alimenté par le coupleur et un enroulement d'excitatrice pouvant être alimenté par un second des onduleurs.

Avantageusement, en dessous d'une altitude prédéterminée, les deux convertisseurs sont configurés pour n'alimenter qu'un seul des deux systèmes de climatisation.

Avantageusement, un onduleur de chaque convertisseur peut alimenter un ventilateur de recirculation d'air.

Avantageusement, un onduleur d'au moins un des convertisseurs peut alimenter un moteur électrique de propulsion d'une roue de l'aéronef.

L'architecture électrique peut comprendre une seconde machine électrique assurant le démarrage d'un second moteur principal de l'aéronef. Avantageusement, l'architecture électrique est configurée pour que les deux convertisseurs puissent alimenter conjointement la première machine électrique ou la seconde machine électrique.

Avantageusement, l'architecture comprend un premier module de pilotage associé à un premier des deux convertisseurs, un second module de pilotage associé à un second des deux convertisseurs et un bus mettant en communication les premier et second modules de pilotage ; l'architecture est alors configurée de façon à rendre le premier convertisseur et le premier module de pilotage maîtres lors de l'alimentation conjointe de la première machine électrique, le second convertisseur et le second module de pilotage étant esclaves ; l'architecture est configurée de façon à rendre le second convertisseur et le second module de pilotage maitres lors de l'alimentation conjointe de la seconde machine électrique, le premier convertisseur et le premier module de pilotage étant esclaves.

Avantageusement, l'architecture comprend un groupe auxiliaire de puissance et une machine électrique de démarrage du groupe auxiliaire de puissance ; l'architecture électrique est alors configurée pour que les deux convertisseurs puissent alimenter la machine électrique de démarrage du groupe auxiliaire de puissance.

Avantageusement, l'architecture comprend au moins une batterie de stockage d'énergie électrique ; la machine électrique de démarrage du groupe auxiliaire de puissance est alors alimentée par la batterie au travers des convertisseurs.

L'invention a également pour objet un aéronef comprenant une architecture électrique selon l'invention.

L'invention a encore pour objet un procédé de fonctionnement d'une architecture électrique selon l'invention dans laquelle la première et la seconde machines électriques sont configurées pour permettre un fonctionnement en moteur ou en générateur permettant d'alimenter les deux convertisseurs, le procédé étant caractérisé en ce qu'il consiste à alimenter la première machine électrique fonctionnant en moteur pour démarrer le premier moteur principal jusqu'à ce que la première machine électrique fonctionne en générateur recevant de l'énergie mécanique du premier moteur principal, la première machine électrique alimentant alors les deux convertisseurs, en ce que le procédé consiste ensuite à alimenter la seconde machine électrique fonctionnant en moteur pour démarrer le second moteur principal.

Avantageusement, la machine électrique de démarrage du groupe auxiliaire de puissance est configurée pour permettre un fonctionnement en moteur ou en générateur permettant d'alimenter les deux convertisseurs et le procédé consiste à alimenter la machine électrique de démarrage du groupe auxiliaire de puissance fonctionnant en moteur pour démarrer le groupe auxiliaire de puissance à partir de la batterie jusqu'à ce que la machine électrique de démarrage du groupe auxiliaire de puissance recevant de l'énergie mécanique du groupe auxiliaire de puissance fonctionne en générateur pour alimenter les deux convertisseurs ; le procédé consiste ensuite à alimenter la première machine électrique fonctionnant en moteur pour démarrer le premier moteur principal.

Avantageusement, le procédé consiste à alimenter le moteur électrique de propulsion d'une roue de l'aéronef après démarrage du groupe auxiliaire de puissance et avant démarrage du premier moteur principal par la première machine électrique.

L'invention sera mieux comprise et d'autres avantages apparaîtront à la lecture de la description détaillée d'un mode de réalisation donné à titre d'exemple, description illustrée par le dessin joint dans lequel :
les figures 1 et 2 représentent un premier mode de réalisation d'une architecture électrique d'un aéronef ;
les figures 3 et 4 représentent un second mode de réalisation d'une architecture électrique d'un aéronef ;
la figure 5 représente schématiquement une architecture électrique d'un aéronef bimoteur ;
la figure 6 représente un exemple de procédé mettent en œuvre l'architecture de la figure 5 ;
les figures 7a et 7b représentent deux variantes permettant d'alimenter un système de climatisation de l'aéronef ;
la figure 8 représente un exemple de coupleur magnétique ;
la figure 9 représente le pilotage de convertisseurs de l'architecture électrique.

Par souci de clarté, les mêmes éléments porteront les mêmes repères dans les différentes figures.

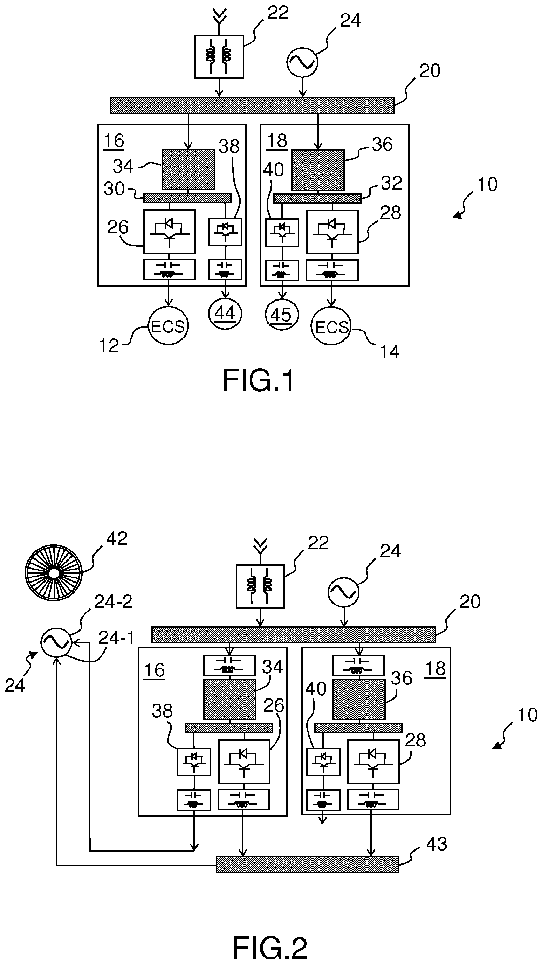

La figure 1 représente un exemple d'architecture électrique 10 d'un avion comprenant deux systèmes de climatisation 12 et 14. Ces systèmes sont également appelés pack de conditionnement d'air et ECS dans la littérature anglo-saxonne pour « Environment Control System ». Ces deux systèmes permettent de réguler la température de l'air dans la cabine de l'avion. L'architecture comprend également deux convertisseurs 16 et 18, chacun destiné à alimenter un des systèmes de climatisation, respectivement 12 et 14. Les deux convertisseurs 16 et 18 sont alimentés par un bus alternatif 20. De façon classique, à bord d'avions gros porteurs, on trouve classiquement des bus 115V 400Hz et plus récemment des bus 230V 400Hz. Ces bus sont souvent appelés bus HVAC pour son acronyme anglo-saxon : « High Voltage Alternating Current ». Lorsque l'avion est posé au sol dans un aéroport, le bus HVAC peut être alimenté par un groupe de parc extérieur à l'avion. L'architecture 10 peut comprendre un transformateur ou autotransformateur 22 permettant d'adapter la tension délivrée par le groupe de parc à la tension du bus HVAC. En vol, le bus HVAC peut être alimenté par les générateurs principaux de l'avion. Un générateur 24 est représenté sur la figure 1. Ces générateurs sont généralement des machines électriques associés aux moteurs principaux de l'avion. Le bus HVAC peut également être alimenté par un groupe auxiliaire de puissance, connu sous le nom d'APU pour son acronyme anglo-saxon : « Auxiliary Power Unit ». L'APU utilise le carburant de l'avion et est couramment utilisé au sol, notamment lorsque l'aéroport ne dispose pas de groupe de parc ou en vol avant l'atterrissage pour éviter toute coupure d'alimentation électrique lorsque les générateurs principaux sont coupés.

Chacun des convertisseurs 16 et 18 permet d'adapter la tension et la fréquence du bus HVAC aux systèmes de climatisation 12 et 14. De façon plus générale, les convertisseurs 16 et 18 permettent de prélever de la puissance d'un réseau de bord pour alimenter les systèmes de climatisation 12 et 14. Le réseau de bord peut être alternatif, comme dans l'exemple représenté ou continu.

Chacun des convertisseurs 16 et 18 comprend au moins un onduleur permettant d'alimenter le système de climatisation associé. Dans l'exemple représenté, le convertisseur 16 comprend un onduleur 26 et le convertisseur 18, un onduleur 28. De façon classique, les onduleurs 26 et 28 sont des onduleurs triphasés. L'invention peut être mise en œuvre quel que soit le nombre de phases. Chacun des onduleurs 26 et 28 reçoit de l'énergie d'un bus continu appelé bus HVDC pour son acronyme anglo-saxon : « High Voltage Direct Current », respectivement 30 et 32. A bord d'aéronefs, on trouve souvent des bus 270V DC ou 540V DC. Toute autre tension continue peut bien entendu être mise en œuvre dans le cadre de l'invention. Chaque convertisseur 16 et 18 peut comprendre un redresseur, respectivement 34 et 36 recevant de l'énergie du bus HVAC 20 et alimentant le bus HVDC respectif 30 ou 32. Chaque convertisseur peut comprendre des éléments de filtrage, notamment en sortie des onduleurs 26 et 28 et/ou en entrée des redresseurs 34 et 36.

Chaque convertisseur 16 et 18 peut comprendre un second onduleur, respectivement 38 et 40 alimentés par le bus HVDC de son convertisseur et permettant d'alimenter d'autres charges de l'aéronef. Les deux onduleurs d'un même convertisseur peuvent être dimensionnés différemment. Dans l'exemple représenté, sur la figure 1, pour le convertisseur 16, l'onduleur 26 peut délivrer une puissance supérieure à celle délivrée par l'onduleur 38. De même pour le convertisseur 18, l'onduleur 28 peut délivrer une puissance supérieure à celle délivrée par l'onduleur 40. Les différents onduleurs peuvent être monodirectionnels permettant d'alimenter les charges de l'avion. Les onduleurs peuvent être bidirectionnels, par exemple si les charges sont susceptibles de régénérer de la puissance. Un onduleur bidirectionnel peut notamment être utilisé pour raccorder une batterie ou une charge susceptible de générer par moment de l'énergie électrique.

L'invention n'est pas limitée à deux onduleurs par convertisseurs. En fonction du besoin, il peut y avoir plus de deux onduleurs dans chacun des convertisseurs 16 et 18.

Les convertisseurs 16 et 18 peuvent être utilisés à d'autres fins, notamment pour démarrer les moteurs principaux de l'avion. Par exemple, lorsque l'avion possède deux moteurs principaux, à chacun d'eux est associé une machine électrique fonctionnant en moteur et permettant de le démarrer. La machine électrique peut être réversible. Autrement dit, elle peut aussi fonctionner en génératrice lorsque le moteur associé est en fonctionnement tel le générateur 24 représenté sur la figure 1.

Sur la figure 2, la machine électrique 24 est représentée dans sa fonction moteur pour démarrer un des moteurs principaux 42 de l'avion. Selon l'invention, les deux convertisseurs 16 et 18 alimentent conjointement la machine électrique 24. En effet, les convertisseurs 16 et 18 sont dimensionnés pour alimenter chacun un des systèmes de climatisation. Pour alimenter une machine électrique permettant de démarrer un moteur principal de l'avion, on utilise les deux convertisseurs 16 et 18 couplés, afin d'éviter de les surdimensionner ce qui serait le cas, si l'un seulement devait pouvoir alimenter la machine électrique 24.

L'avion comprend généralement plusieurs moteurs principaux, en général deux ou quatre pour les avions gros porteurs. Le démarrage des moteurs peut se faire séquentiellement. Plus précisément, les convertisseurs 16 et 18 alimentent une première machine électrique 24 associée à un premier moteur principal à partir d'énergie provenant de l'APU ou d'une batterie de l'avion. Une fois le premier moteur démarré, sa machine électrique associée peut générer du courant pour alimenter le bus HVAC. Ensuite seulement, les convertisseurs 16 et 18 sont déconnectés de la machine électrique 24 du premier moteur principal pour être connectés à une autre machine électrique associée à un second moteur principal de l'avion et ainsi de suite jusqu'au démarrage de l'ensemble des moteurs de l'avion. Pendant cette phase de démarrage des moteurs les systèmes de climatisation 12 et 14 ne sont pas alimentés. L'inertie thermique de la cabine permet d'accepter cette coupure momentanée d'alimentation qui reste de l'ordre d'une minute.

Selon l'invention, la machine électrique 24 comprend deux enroulements séparés : un enroulement principal 24-1 et un enroulement d'excitatrice 24-2. L'enroulement principal 24-1 nécessite beaucoup plus de puissance que l'enroulement d'excitatrice 24-2. Dans l'exemple représenté, les deux onduleurs 26 et 28 sont couplés pour alimenter l'enroulement principal 24-1. L'enroulement d'excitatrice 24-2 ne nécessite, quant à lui, que la puissance délivrée par l'onduleur 38. Le couplage des deux onduleurs 26 et 28 peut être assuré par un coupleur magnétique 43.

L'architecture électrique 10 comprend des contacteurs commandés, non représentés et permettant de passer du mode de fonctionnement de la figure 1 à celui de la figure 2.

Dans le mode de fonctionnement de la figure 1, seuls les onduleurs 26 et 28 sont utilisés pour alimenter les systèmes de climatisation 12 et 14. Les onduleurs 38 et 40 peuvent être utilisés pour alimenter d'autres charges de l'aéronef, comme par exemple des ventilateurs de recirculation d'air 44 et 45. Lors du démarrage des moteurs principaux, les ventilateurs 44 et 45 ne seront temporairement pas alimentés.

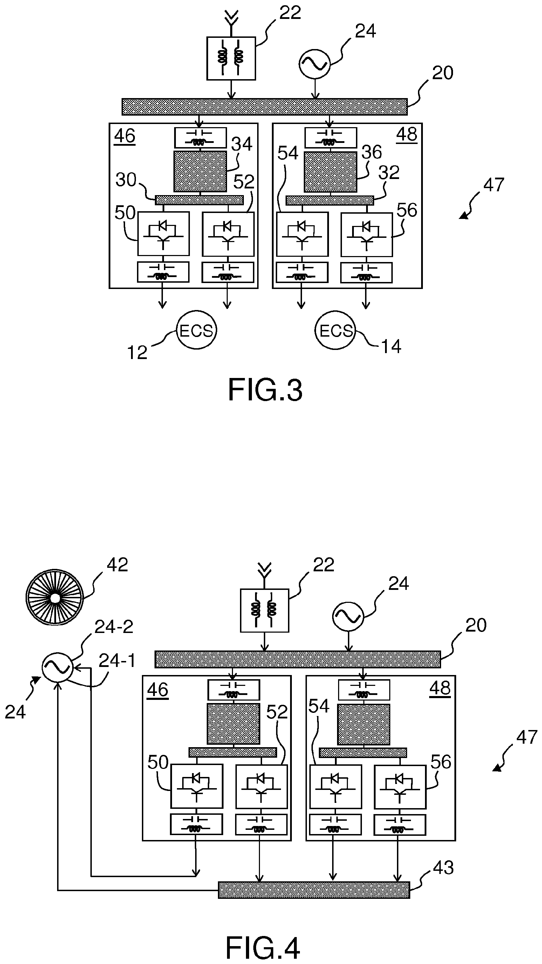

Les figures 3 et 4 représentent un second mode de réalisation de l'invention dans lequel l'architecture électrique 47 comprend aussi deux convertisseurs, référencés ici 46 et 48. On retrouve dans le convertisseur 46, le bus HVDC 30 et le redresseur 34 alimenté par le bus HVAC 20. De même on retrouve dans le convertisseur 48, le bus HVDC 32 et le redresseur 36 alimenté par le bus HVAC 20. Dans chacun des convertisseurs 46 et 48, le bus HVDC alimente deux onduleurs, respectivement 50 et 52 pour le convertisseur 46 et, 54 et 56 pour le convertisseur 48. A la différence du mode de réalisation des figures 1 et 2, sur les figures 3 et 4, les deux onduleurs d'un même convertisseur sont identiques. Plus précisément, ils sont destinés à délivrer la même puissance nominale.

Sur la figure 3, comme sur la figure 1, les convertisseurs 46 et 48 alimentent chacun un des systèmes de climatisation 12 et 14. Pour le convertisseur 46, les deux onduleurs 50 et 52 sont couplés pour alimenter le système de climatisation 12. De même, pour le convertisseur 48, les deux onduleurs 54 et 56 sont couplés pour alimenter le système de climatisation 14. Le couplage des onduleurs peut être réalisé au moyen d'un coupleur magnétique disposé entre les onduleurs et le système de climatisation associé. Alternativement, il est possible de mettre en œuvre un système de climatisation équipé d'une machine électrique ayant un nombre de phases égal au double du nombre de phase de chaque onduleur.

Comme pour le mode de réalisation de la figure 1, au moins un des convertisseurs 46 et 48 peut alimenter d'autres charges de l'avion, comme par exemple le ou les moteurs électriques de propulsion des roues de l'avion.

Sur la figure 4, comme sur la figure 2, les convertisseurs 46 et 48 alimentent la machine électrique 24. Dans l'exemple représenté, les onduleurs 52, 54 et 56 sont couplés pour alimenter l'enroulement principal 24-1. L'enroulement d'excitatrice 24-2 ne nécessite, quant à lui, que la puissance délivrée par l'onduleur 50.

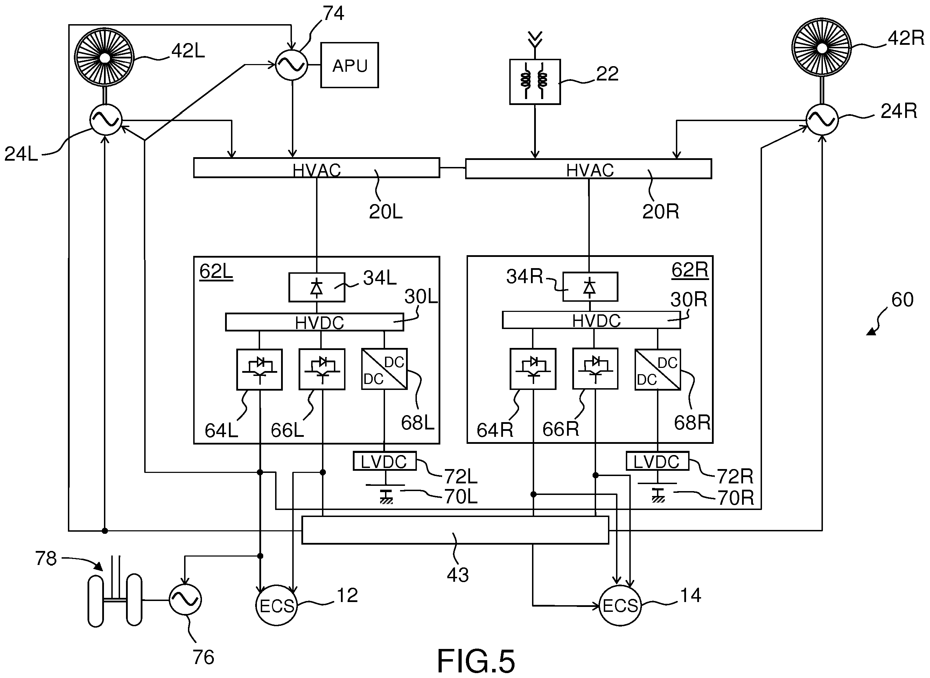

La figure 5 représente schématiquement un exemple d'architecture électrique 60 d'un avion bimoteur. Les deux moteurs principaux de l'avion sont référencés 42R pour le moteur droit et 42L pour le moteur gauche. De façon générale, on attribue aux références décrites précédemment, un suffixe R ou L en fonction de leur association privilégiée au moteurs droit et gauche. Il est bien entendu possible d'étendre cette architecture à un avion tri ou quadrimoteur.

On retrouve deux convertisseurs, référencés ici 62L et 62R. On retrouve dans le convertisseur 62L, un bus HVDC 30L et un redresseur 34L alimenté par un bus HVAC 20L. De même on retrouve dans le convertisseur 62R, un bus HVDC 30R et un redresseur 34R alimenté par un bus HVAC 20R. Les bus HVAC 20L et 20R peuvent être connectés pour former ensemble le bus HVAC 20 décrit précédemment. La connexion entre les deux bus HVAC 20L et 20R peut être permanente ou pilotable, notamment en cours d'utilisation, afin de permettre de dissocier les bus HVAC 20L et 20R en cas de panne d'un composant associé à l'un des bus et pouvant se propager à l'ensemble des équipements droits ou gauches de l'avion.

Comme précédemment décrit, l'architecture 60 peut être connectée à un groupe de parc lorsque l'avion et au sol. La connexion se fait par un des bus HVAC 20L et 20R éventuellement par l'intermédiaire du transformateur ou autotransformateur 22. Sur la figure 5, le transformateur 22 est connecté au bus HVAC 20R. La connexion peut également se faire au bus HVAC 20L.

Dans chacun des convertisseurs 62L et 62R, le bus HVDC alimente deux onduleurs, respectivement 64L et 66L pour le convertisseur 62L et, 64R et 66R pour le convertisseur 62R. Les deux onduleurs d'un même convertisseur peuvent être différents comme dans le mode de réalisation des figures 1 et 2 ou identiques comme dans le mode de réalisation des figures 3 et 4. En complément, chacun des convertisseurs 62L et 62R peut comprendre un convertisseur élémentaire continu/continu, respectivement 68L et 68R pouvant charger ou prélever de l'énergie d'une batterie, respectivement 70L et 70R éventuellement par l'intermédiaire d'un bus continu basse tension LVDC respectivement 72L et 72R.

Associé à chaque moteur principal 42L et 42R on retrouve une machine électrique, respectivement 24L et 24R pouvant fonctionner en moteur pour démarrer le moteur principal associé et pouvant fonctionner en générateur pour alimenter des bus HVAC 20L ou 20R.

L'avion peut également être équipé d'un groupe auxiliaire de puissance APU et d'une machine électrique 74 de démarrage de l'APU. Comme pour les machines électriques 24L et 24R, la machine électrique 74 peut fonctionner en moteur pour démarrer l'APU ou en générateur, une fois l'APU démarré pour alimenter l'architecture électrique 60, par exemple au niveau d'un des bus HVAC 20L ou 20R. La connexion de la machine électrique 74 peut alternativement se faire à un autre point de l'architecture 60, par exemple au niveau d'un des bus HVDC 30L ou 30R, ou niveau d'un des bus LVDC 72L ou 72R.

Sur la figure 5, on retrouve également le coupleur magnétique 43 permettant d'alimenter l'une ou l'autre des machines électriques 24L ou 24R. Généralement la puissance nécessaire au démarrage de l'APU est plus faible que celle nécessaire au démarrage des moteurs principaux 42L et 42R. Il est possible de n'utiliser qu'un seul onduleur pour alimenter la machine électrique 74 pour le démarrage de l'APU. Alternativement, le coupleur 43 peut être utilisé pour coupler plusieurs onduleurs afin d'alimenter la machine électrique 74 si la puissance nécessaire au démarrage de l'APU le nécessite.

Dans l'architecture 60, on retrouve également les systèmes de climatisation 12 et 14 alimentés respectivement par les convertisseurs 62L et 62R.

Dans de nombreux avions équipés de deux systèmes de climatisation, ceux-ci peuvent ne pas être tous deux mis en œuvre durant le vol. Plus précisément, il peut être utile de ne mettre en œuvre qu'un seul des deux systèmes de climatisation en dessous d'une altitude prédéterminée. Il est possible de n'utiliser qu'un seul des deux convertisseurs 62L et 62R pour alimenter le système de climatisation retenu. L'autre des deux convertisseurs n'étant pas utilisé pour la climatisation. Alternativement, il est avantageux d'équilibrer l'utilisation des deux convertisseurs 62L et 62R. Il est alors souhaitable d'alimenter le système de climatisation retenu à partir des deux convertisseurs couplés. Le couplage peut être réalisé en utilisant un coupleur dédié ou en réutilisant le coupleur 43 n'est plus utilisé après démarrage des moteurs principaux 42L et 42R.

Pour assurer son déplacement au sol, notamment depuis une place de parking jusqu'à la piste de décollage, entre deux places de parking ou depuis la piste d'atterrissage jusqu'à une place de parking, l'avion utilise généralement ses moteurs principaux : turboréacteur, turbopropulseurs alimentés au moyen de carburant. Ces moteurs sont polluants et sont source de nuisances sonores. Pour assurer le déplacement au sol, il est possible d'équiper le ou les trains d'atterrissage de l'avion de moteurs électriques pouvant entraîner ses roues afin de permettre le déplacement de l'avion. Sur la figure 5, on a représenté une machine électrique 76 motorisant un train d'atterrissage 78. La machine électrique 76 est ici alimentée par l'onduleur 64L. Il est bien entendu possible d'alimenter la machine électrique 76 au moyen de plusieurs onduleurs. De plus, la machine électrique 76 peut être utilisée en génératrice, par exemple pour freiner les roues du train d'atterrissage 78. Le ou les onduleurs auxquels la machine électrique 76 est raccordée sont alors réversibles afin de l'alimenter ou de récupérer de l'énergie en fonction du mode de fonctionnement de la machine électrique 76, moteur ou générateur.

Sur la figure 5, différents équipements peuvent être connectés aux convertisseurs 62L et 62R. D'autres équipements embarqués à bord de l'avion peuvent également être susceptible d'être connectés aux convertisseurs 62L et 62R. Ces équipements ne sont pas tous connectés en permanence aux convertisseurs 62L et 62R. Des contacteurs, non représentés sur les figures, permettent de connecter un ou plusieurs équipements. La connexion des différents équipements varie temporellement lors de la mission de l'avion. Par exemple, lors du roulage de l'avion au sol, il est possible d'interrompre l'alimentation d'au moins un des systèmes de climatisation, en l'occurrence le système de climatisation 12, pour alimenter le ou les moteurs électriques de propulsion des roues de l'avion.

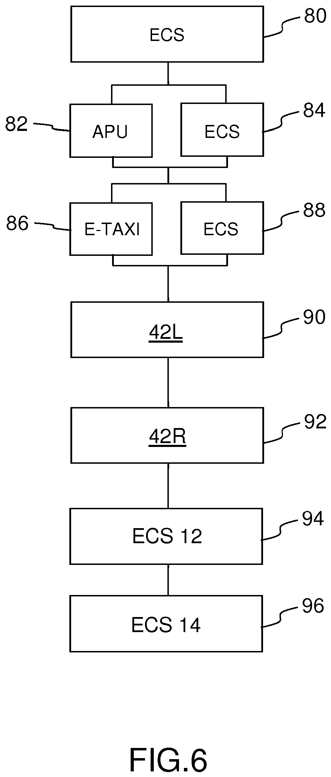

La figure 6 représente un exemple de procédé mettent en œuvre l'architecture de la figure 5, procédé dans lequel différentes phases de la mission d'un avion peuvent s'enchaîner.

Lorsque l'avion est immobilisé à son point de stationnement, il est généralement alimenté par un groupe de parc et les réseaux HVAC 20L et 20R reçoivent de l'énergie par le transformateur 22. Dans une première étape 80, au moins un des systèmes de climatisation 12 ou 14 est alimenté. La climatisation est notamment utile lors de l'embarquement des passagers à bord de l'avion.

Une fois l'embarquement terminé, l'avion doit pouvoir quitter son point de stationnement. Le groupe de parc est alors déconnecté et lors d'une étape 82, le groupe auxiliaire de puissance APU est démarré. Le démarrage de l'APU peut se faire en prélevant de l'énergie du groupe de parc avant sa déconnexion ou des batteries 70L et/ou 70R. Le démarrage de l'APU peut ne nécessiter qu'un seul des deux convertisseurs 62R ou 62L. Dans ce cas, il possible de conserver un des groupes de climatisation 12 ou 14 alimenté. L'alimentation du groupe de climatisation 14 est illustrée par une étape 84. Alternativement, durant l'étape 82, il est possible couper l'alimentation du ou des groupes de climatisation 12 et 14. Le démarrage de l'APU peut durer typiquement de l'ordre d'une minute. Durant ce laps de temps, l'inertie de la cabine est suffisante pour que la dégradation du confort des passagers reste acceptable.

Après démarrage de l'APU, l'avion doit être en mesure de se déplacer au sol jusqu'à la piste de décollage. Dans les avions récents, ce déplacement peut se faire au moyen de la ou des machines électriques 76 motorisant le ou les trains d'atterrissage 78. L'alimentation de la ou des machines électriques 76 est réalisée à l'étape 86. La ou les machines électriques 76 peuvent n'utiliser qu'un des deux convertisseurs 62L ou 62R. L'autre convertisseur peut être utilisé pour l'alimenter un des systèmes de climatisation 12 ou 14. L'alimentation d'un des systèmes de climatisation durant l'alimentation de la ou des machines électriques 76 est représentée sur la figure 5 par une étape 88. Alternativement, si la ou les machines électriques 76 nécessitent les deux convertisseurs 62L ou 62R pour leur fonctionnement, il est possible de suspendre le fonctionnement des deux systèmes de climatisation 12 et 14. L'étape 88 est alors omise.

Avant le décollage les moteurs principaux 42L et 42R sont démarrés successivement. Plus précisément, la machine électrique 24L, fonctionnant en moteur, démarre le moteur principal 42L. Ce démarrage est représenté par une étape 90 sur la figure 6. Après démarrage, le moteur principal 42L peut entrainer la machine électrique 24L qui fonctionne alors en générateur et alimente alors les deux convertisseurs 62L et 62R.

Ensuite, la machine électrique 24R, fonctionnant en moteur, démarre le moteur principal 42R, ce qui est illustré sur la figure 5 par une étape 92. Comme précédemment, après démarrage, le moteur principal 42R peut entrainer la machine électrique 24R qui fonctionne alors en générateur et alimente les deux convertisseurs 62L et 62R.

De façon classique, dans les avions bimoteurs, le moteur principal gauche est démarré avant le moteur principal droit. La localisation à droite ou à gauche de l'avion, est purement conventionnelle. Sans sortir du cadre de l'invention, il est bien entendu possible démarrer le moteur principal droit avant le moteur principal gauche.

Lors des étapes 90 et 92, les deux convertisseurs 62L et 62R sont utilisés pour démarrer successivement les deux moteurs principaux 42L et 42R. Durant les étapes 90 et 92, les systèmes de climatisation 12 et 14 ne sont plus alimentés. Après démarrage des deux moteurs principaux 42L et 42R, les systèmes de climatisation 12 et 14 sont à nouveau alimentés.

Il est possible de dissocier l'alimentation des deux systèmes de climatisation 12 et 14. Seul un des deux systèmes, par exemple le système de climatisation 12 est alimenté lors d'une étape 94. Comme évoqué plus haut, le coupleur 43 peut être utilisé pour que les deux convertisseurs 62L et 62R alimentent conjointement le système de climatisation 12, Ensuite, lorsque l'avion atteint une altitude prédéterminée lors d'une étape 96, les deux systèmes de climatisation 12 et 14 sont alimentés, chacun par un des convertisseurs 62L et 62R.

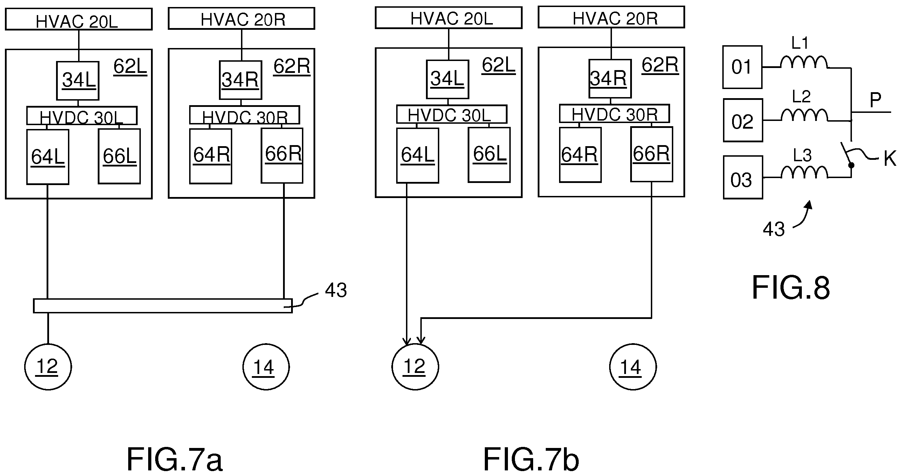

Les figures 7a et 7b représentent deux variantes permettant d'alimenter un des systèmes de climatisation, par exemple le système 12, le système de climatisation 14 n'étant pas alimenté. L'alimentation d'un seul des systèmes de climatisation peut intervenir aux étapes 84, 88 et 94. Sur la figure 7a, le système de climatisation 12 est alimenté par les onduleurs 64L et 66R au moyen du coupleur magnétique 43. L'utilisation d'un coupleur magnétique est avantageuse lorsque le nombre de phases des onduleurs 64L et 66R est le même que le nombre de phases de la machine électrique du système de climatisation 12, notamment la machine électrique entrainant un compresseur. Il est classique de mettre en œuvre une machine électrique triphasée fonctionnant alors avec des onduleurs également triphasés. Sur la figure 7a, un onduleur de chacun des convertisseurs 62L et 62R est utilisé pour l'alimentation du système de climatisation 12. Cela permet d'équilibrer les réseaux HVAC 20L et 20R. Alternativement, lorsque le besoin d'équilibrage des réseaux HVAC 20L et 20R n'est pas nécessaire où lorsque les onduleurs non utilisés pour le système de climatisation 12 sont utilisés pour d'autres charges assurant l'équilibrage, il est possible d'alimenter le système de climatisation 12 par deux onduleurs d'un même convertisseur.

Sur la figure 7b, les deux onduleurs 64L et 66R alimentent directement le système de climatisation 12 sans coupleur magnétique. Cette variante est avantageuse lorsque le nombre de phases de la machine électrique du système de climatisation 12 est le double du nombre de phases des onduleurs 64L et 66R. Par exemple, les onduleurs peuvent être triphasés et la machine électrique du système de climatisation 12 peut alors être hexaphasée, ce qui permet de se passer d'un coupleur.

Les deux variantes des figures 7a et 7b mettent en œuvre les convertisseurs 62L et 62R représentés sur les figures 3 et 4. Il est également possible de mettre en œuvre ces deux variantes en utilisant les convertisseurs 16 et 18 représentés sur les figures 1 et 2.

Par ailleurs, dans les deux variantes des figures 7a et 7b, il est possible d'utiliser les onduleurs non utilisés pour alimenter le système de climatisation 12 afin d'alimenter d'autres charges de l'aéronef.

La figure 8 représente un exemple de coupleur magnétique 43 adapté pour coupler plusieurs onduleurs et plus précisément une phase de chaque onduleur. Le coupleur de la figure 8 est dupliqué pour chacune des phases lorsque les onduleurs sont polyphasés.

En série avec une phase de chaque onduleur, notés ici O1, O2 et O3, est raccordé une inductance. Sur la figure 8 trois inductances L1, L2 et L3 sont représentées. Le nombre d'inductances est à adapter en fonction du nombre d'onduleurs que l'on souhaite coupler. Les bornes des inductances L1, L2 et L3 non raccordées aux onduleurs O1, O2 et O3 sont raccordées ensemble pour former une phase P de sortie du coupleur destinée à alimenter une machine électrique, comme par exemple celle du système de climatisation 12 ou l'enroulement principal 24-1. Un ou plusieurs contacteurs K permettant de relier temporairement les inductances L1, L2 et L3 entre elles en fonction du besoin de la charge alimentée par le coupleur 43. Sur la figure 8, un interrupteur K est représenté. Toute combinaison d'interrupteurs peut être mise en œuvre afin d'assurer le couplage souhaité.

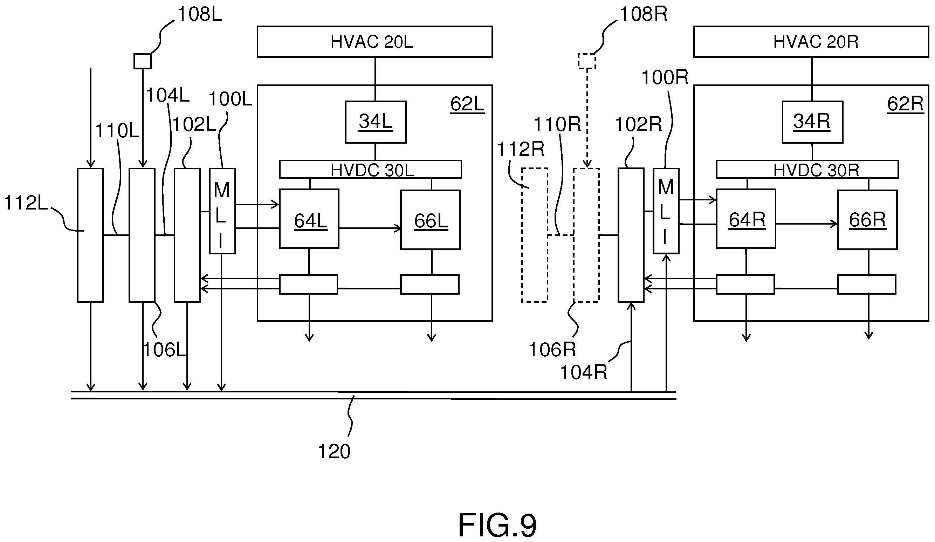

La figure 9 illustre le pilotage de convertisseurs. Ce pilotage peut être mis en œuvre dans les différents modes de réalisation de l'architecture électrique. Comme précédemment, le pilotage est illustré en rapport avec les convertisseurs 62L et 62R représentés sur les figures 3 et 4. Il est également possible de mettre en œuvre ce pilotage pour les convertisseurs 16 et 18 représentés sur les figures 1 et 2.

Associé à chaque convertisseur 62L et 62R et plus précisément à chaque onduleur, un modulateur de largeur d'impulsions MLI délivre des ordres binaires d'ouverture et de fermeture d'interrupteurs électroniques de chacun des onduleurs. Un modulateur MLI 100L est associé au convertisseur 62L et pilote les onduleurs 64L et 66L. Un modulateur MLI 100R est associé au convertisseur 62R et pilote les onduleurs 64R et 66R. Chaque convertisseur peut comprendre une commande rapprochée (non représentée) directement connectée aux grilles d'interrupteurs électroniques appartenant aux différents onduleurs. Les commandes rapprochées génèrent des signaux adaptés aux interrupteurs à partir des ordres binaires délivrés par les modulateurs 100L et 100R.

En amont de chacun des modulateurs de largeur d'impulsions 100L et 100R, l'architecture électrique comprend un module d'asservissement de l'onduleur en courant, respectivement 102L et 102R. Un capteur de courant mesure le courant de sortie de chaque onduleur et transmet cette mesure au module respectif 102L ou 102R. Le capteur de courant peut être situé au niveau d'un élément de filtrage disposé dans le convertisseur en aval de l'onduleur correspondant. Le capteur de courant peut réaliser sa mesure sur l'une des phases ou simultanément sur les différentes phases de l'onduleur correspondant. Le module 102L ou 102R et le ou les capteurs de courant associés forment une boucle d'asservissement appelée boucle de courant recevant une consigne en courant, respectivement 104L ou 104R. Chaque module 102L ou 102R délivre un rapport cyclique à chacun des modulateurs MLI pour que le courant délivré par l'onduleur correspondant suive la consigne en courant 104L et 104R.

En amont de chacun des modules 102L et 102R, l'architecture comprend un module d'asservissement du fonctionnement des charges alimentées par les onduleurs. Sur la figure 9, ces modules sont référencés respectivement 106L et 106R. Associé à chaque module 106L et 106R, un ou plusieurs capteur de fonctionnement mesure un paramètre caractéristique du fonctionnement de la charge alimentée par chaque les onduleurs. Il peut s'agir par exemple de la vitesse de rotation d'un moteur ou du couple qu'il délivre. Sur la figure 9 les capteurs de fonctionnement sont respectivement référencés 108L et 108R. Chaque charge pouvant être alimentée par un onduleur disposant de son propre capteur de fonctionnement et la connexion des modules 106L et 106R aux capteurs associés varie en fonction de la charge alimentée par l'onduleur.

Le module 106L ou 106R et son capteur 108L et 108R associé forme une boucle d'asservissement appelée boucle de charge recevant une consigne de fonctionnement de la charge 110L ou 110R. La boucle de charge modifie la consigne en courant 104R ou 104L pour que le paramètre caractéristique du fonctionnement de la charge 12 suive la consigne 110L ou 110R de fonctionnement de la charge.

En amont de chaque module 106L et 106R, l'architecture peut comprendre un module de sélection de mode, respectivement 112L et 112R. Ce module reçoit une consigne de haut niveau définissant le fonctionnement de la charge. Par exemple pour la machine électrique 24 associée à un moteur principal, la consigne peut définir si la machine électrique 24 fonctionne en générateur pour alimenter les réseaux HVAC ou en moteur permettant de démarrer le moteur principal associé. En mode générateur, la consigne de haut niveau peut par exemple définir la tension que doit fournir le générateur.

Cette consigne peut provenir d'un système de gestion du moteur principal s'interfaçant entre le cockpit de l'aéronef et le moteur principal. Dans la littérature anglo-saxonne, le système de gestion est souvent appelé FADEC pour son acronyme anglais : « Full Authority Digital Engine Control ». Le système de gestion du moteur gère notamment l'injection de carburant dans la turbine du moteur en fonction de la demande de puissance opérée par le pilote au travers des commandes de vol. La consigne peut également provenir d'un système de gestion des générateurs électriques de l'aéronef, connu dans la littérature anglo-saxonne sous le nom de GCU pour son acronyme anglais : « Generator Control Unit ».

Sur la figure 9, les modules 106L et 112L sont représentés en traits pleins et les modules 106R et 112R sont représentés en traits pointillés. De plus, apparait sur la figure 9 un bus 120 sur lequel sont reliés les différents modules 100L, 100R, 102L, 102R, 106L, 106R, 112L et 112R. La représentation en pointillés des modules 106R et 112R illustre le fait que les deux convertisseurs 62L et 62R alimentent ensemble une même charge, par exemple la machine électrique 24L ou le système de climatisation 12.

Dans ce mode de fonctionnement, seuls le ou les capteurs 108L associés à la charge alimentée fournissent une mesure qui n'est transmise qu'au module d'asservissement du fonctionnement 106L. La consigne en courant 104L est délivrée par le module 106L. Le module 106R est, quant à lui, inactif. La consigne en courant 104R est également générée par le module 106L et est transmise au module 102 au travers du bus 120.

Le modulateur MLI 100L peut également transmettre des informations au modulateur MLI 100R, notamment une synchronisation afin que les onduleurs associés puissent être plus facilement couplés.

Le démarrage des deux moteurs 42L et 42R se fait séquentiellement aux étapes 94 et 96. Il serait possible de mutualiser les modules 106R et 106L pour ne disposer que d'un seul module dans l'architecture électrique de l'aéronef. Cependant, il est avantageux d'éviter les croisements entre les équipements droit et gauche de l'aéronef. Ainsi chaque convertisseur dispose de ses modules 106R ou L et 112R ou L. Lors de l'alimentation de la machine électrique 24R, les modules 106R et 110R sont actif et transmettent leur consigne et leur synchronisation par le bus 120 au module d'asservissement en courant 102L et au modulateur MLI 100L.

Pour assurer le pilotage des convertisseurs, le découpage proposé en différents modules n'est donné qu'à titre d'exemple. D'autres découpages ou boucles d'asservissement peuvent apparaitre. La distinction fonctionnelle entre les différents modules associés à chacun des convertisseurs peut varier sans sortir du cadre de l'invention.

De façon plus générale, lors de l'alimentation d'une charge gauche de l'aéronef, notamment, le moteur principal gauche 42L ou le système de climatisation gauche 12, le convertisseur gauche 62L et ses moyens de pilotage fonctionnent en maître. Le convertisseur droit 62R et ses moyens de pilotage fonctionnent en esclave lors de leur contribution à l'alimentation de la charge gauche. Inversement, lors de l'alimentation d'une charge droite de l'aéronef, le convertisseur droit 62R et ses moyens de pilotage fonctionnent en maître tandis que le convertisseur gauche 62L et ses moyens de pilotage fonctionnent en esclave lors de leur contribution à l'alimentation de la charge droite.

## Revendications

1. Architecture électrique d'un aéronef comprenant deux systèmes de climatisation (12, 14), deux convertisseurs (16, 18 ; 46, 48 ; 62L, 62R) destinés chacun à alimenter un des systèmes de climatisation (12, 14), et comprenant au moins une première machine électrique (24 ; 24L) assurant le démarrage d'un premier moteur principal (42 ; 42L) de l'aéronef, et dans laquelle chacun des deux convertisseurs (16, 18 ; 46, 48 ; 62L, 62R) comprend deux onduleurs (26, 28, 38, 40 ; 50, 52, 54 56 ; 64L, 66L, 64R, 66R), **caractérisée en ce que** l'architecture électrique (10 ; 47 ; 60) est configurée pour que les deux convertisseurs (16, 18 ; 46, 48 ; 62L, 62R) puissent alimenter conjointement la première machine électrique (24 ; 24L), **en ce que** l'architecture électrique (10 ;47 ; 60) comprend en outre un coupleur (43) permettant d'associer au moins deux premiers des onduleurs, et **en ce que** la machine électrique (24) comprend un enroulement principal (24-1) pouvant être alimenté par le coupleur (43) et un enroulement d'excitatrice (24-2) pouvant être alimenté par un second des onduleurs.

2. Architecture électrique selon la revendication 1, **caractérisée en ce qu'**en dessous d'une altitude prédéterminée, les deux convertisseurs (16, 18 ; 46, 48 ; 62L, 62R) sont configurées pour n'alimenter qu'un seul des deux systèmes de climatisation (12, 14).

3. Architecture électrique selon l'une des revendications précédentes, **caractérisée en ce qu'**un onduleur de chaque convertisseur (16, 18 ; 46, 48 ; 62L, 62R) est configuré pour alimenter un ventilateur de recirculation d'air (44, 45).

4. Architecture électrique selon l'une des revendications précédentes, **caractérisée en ce qu'**un onduleur (64L) d'au moins un des convertisseurs (62L) est configuré pour alimenter un moteur électrique (76) de propulsion d'une roue (78) de l'aéronef.

5. Architecture électrique selon l'une des revendications précédentes, **caractérisée en ce qu'**elle comprend une seconde machine électrique (24R) assurant le démarrage d'un second moteur principal (42R) de l'aéronef et **en ce que** l'architecture électrique (60) est configurée pour que les deux convertisseurs (62L, 62R) puissent alimenter conjointement la première machine électrique (24L) ou la seconde machine électrique (24R).

6. Architecture électrique selon la revendication 5, **caractérisée en ce que** l'architecture comprend un premier module de pilotage (100L, 102L, 106L, 112L) associé à un premier des deux convertisseurs (62L), un second module de pilotage (100R, 102R, 106R, 112R) associé à un second des deux convertisseurs (62R) et un bus (120) mettant en communication les premier et second modules de pilotage, **en ce que** l'architecture est configurée de façon à rendre le premier convertisseur (62L) et le premier module de pilotage (100L, 102L, 106L, 112L) maîtres lors de l'alimentation conjointe de la première machine électrique (24L), le second convertisseur (62R) et le second module de pilotage (100R, 102R, 106R, 112R) étant esclaves et **en ce que** l'architecture est configurée de façon à rendre le second convertisseur (62R) et le second module de pilotage (100R, 102R, 106R, 112R) maitres lors de l'alimentation conjointe de la seconde machine électrique (24R), le premier convertisseur (62L) et le premier module de pilotage (100L, 102L, 106L, 112L) étant esclaves.

7. Architecture électrique selon l'une des revendications précédentes, **caractérisée en ce qu'**elle comprend un groupe auxiliaire de puissance (APU) et une machine électrique (74) de démarrage du groupe auxiliaire de puissance (APU), et **en ce que** l'architecture électrique est configurée pour que les deux convertisseurs (62L, 62R) puissent alimenter la machine électrique (74) de démarrage du groupe auxiliaire de puissance (APU).

8. Architecture électrique selon la revendication 7, **caractérisée en ce qu'**elle comprend au moins une batterie (70L, 70R) de stockage d'énergie électrique, et **en ce que** la machine électrique (74) de démarrage du groupe auxiliaire de puissance (APU) est alimentée par la batterie (70L, 70R) au travers des convertisseurs (62L, 62R).

9. Aéronef comprenant une architecture électrique selon l'une des revendications précédentes.

10. Procédé de fonctionnement d'une architecture électrique selon la revendication 5 dans laquelle la première et la seconde machines électriques (24L, 24R) sont configurées pour permettre un fonctionnement en moteur ou en générateur permettant d'alimenter les deux convertisseurs (62L, 62R), le procédé étant **caractérisé en ce qu'**il consiste à alimenter la première machine électrique (24L) fonctionnant en moteur pour démarrer le premier moteur principal (42L) jusqu'à ce que la première machine électrique (24L) fonctionne en générateur recevant de l'énergie mécanique du premier moteur principal (42L), la première machine électrique (24L) alimentant alors les deux convertisseurs (62L, 62R), **en ce que** le procédé consiste ensuite à alimenter la seconde machine électrique (24R) fonctionnant en moteur pour démarrer le second moteur principal (42R).

11. Procédé selon la revendication 10 de fonctionnement d'une architecture électrique selon les revendications 5 à 8, dans laquelle la machine électrique (74) de démarrage du groupe auxiliaire de puissance (APU) est configurée pour permettre un fonctionnement en moteur ou en générateur permettant d'alimenter les deux convertisseurs (62L, 62R), **caractérisé en ce qu'**il consiste à alimenter la machine électrique (74) de démarrage du groupe auxiliaire de puissance (APU) fonctionnant en moteur pour démarrer le groupe auxiliaire de puissance (APU) à partir de la batterie (70L, 70R) jusqu'à ce que la machine électrique (74) de démarrage du groupe auxiliaire de puissance (APU) recevant de l'énergie mécanique du groupe auxiliaire de puissance (APU) fonctionne en générateur pour alimenter les deux convertisseurs (62L, 62R), **en ce que** le procédé consiste ensuite à alimenter la première machine électrique (24L) fonctionnant en moteur pour démarrer le premier moteur principal (42L).

12. Procédé selon la revendication 11 de fonctionnement d'une architecture électrique selon les revendications 4 à 8, **caractérisé en ce qu'**il consiste à alimenter le moteur électrique (76) de propulsion d'une roue (78) de l'aéronef après démarrage du groupe auxiliaire de puissance (APU) et avant démarrage du premier moteur principal (42L) par la première machine électrique (24L).

## Patentansprüche

1. Elektrische Architektur eines Luftfahrzeugs, beinhaltend zwei Klimatisierungssysteme (12, 14), zwei Umwandler (16, 18; 46, 48; 62L, 62R), jeweils dazu bestimmt, eines der Klimatisierungssysteme (12, 14) zu versorgen, und umfassend mindestens eine erste elektrische Maschine (24; 24L), welche das Anlassen eines ersten Hauptmotors (42; 42L) des Luftfahrzeugs sicherstellt, und wobei jeder der beiden Umwandler (16, 18; 46, 48; 62L, 62R) zwei Wechselrichter (26, 28, 38, 40; 50, 52, 54, 56; 64L, 66L, 64R, 66R) umfasst, **dadurch gekennzeichnet, dass** die elektrische Architektur (10; 47; 60) konfiguriert ist, damit die beiden Umwandler (16, 18; 46, 48; 62L, 62R) gemeinsam die erste elektrische Maschine (24; 24L) versorgen können, dadurch, dass die elektrische Architektur (10; 47; 60) ferner einen Koppler (43) umfasst, welcher es ermöglicht, mindestens zwei erste der Wechselrichter zu verbinden, und **dadurch gekennzeichnet, dass** die elektrische Maschine (24) eine Hauptwicklung (24-1) umfasst, welche durch den Koppler (43) und eine Erregerwicklung (24-2) versorgt werden kann, welche durch einen zweiten der Wechselrichter versorgt werden kann.

2. Elektrische Architektur nach Anspruch 1, **dadurch gekennzeichnet, dass** unterhalb einer vorbestimmten Höhe die beiden Umwandler (16, 18; 46, 48; 62L, 62R) konfiguriert sind, um nur ein einziges der beiden Klimatisierungssysteme (12, 14) zu versorgen.

3. Elektrische Architektur nach einem der vorhergehenden Ansprüche, **dadurch gekennzeichnet, dass** ein Wechselrichter eines jeden Umwandlers (16, 18; 46, 48; 62L, 62R) konfiguriert ist, um ein Luftumwälzungsgebläse (44, 45) zu versorgen.

4. Elektrische Architektur nach einem der vorhergehenden Ansprüche, **dadurch gekennzeichnet, dass** ein Wechselrichter (64L) von mindestens einem der Umwandler (62L) konfiguriert ist, um einen Elektromotor (76) zum Antrieb eines Rades (78) des Luftfahrzeugs zu versorgen.

5. Elektrische Architektur nach einem der vorhergehenden Ansprüche, **dadurch gekennzeichnet, dass** sie eine zweite elektrische Maschine (24R) umfasst, welche das Anlassen eines zweiten Hauptmotors (42R) des Luftfahrzeugs sicherstellt und dadurch, dass die elektrische Architektur (60) konfiguriert ist, damit die beiden Umwandler (62L, 62R) gemeinsam die erste elektrische Maschine (24L) oder die zweite elektrische Maschine (24R) versorgen können.

6. Elektrische Architektur nach Anspruch 5, **dadurch gekennzeichnet, dass** die Architektur ein erstes Steuerungsmodul (100L, 102L, 106L, 112L) umfasst, welches einem ersten der beiden Umwandler (62L) zugeordnet ist, ein zweites Steuerungsmodul (100R, 102R, 106R, 112R), welches einem zweiten der beiden Umwandler (62R) zugeordnet ist und einen Bus (120), welcher das erste und das zweite Steuerungsmodul in Kommunikation versetzt, dadurch, dass die Architektur so konfiguriert ist, dass der erste Umwandler (62L) und das erste Steuerungsmodul (100L, 102L, 106L, 112L) bei der gemeinsamen Versorgung der ersten elektrischen Maschine (24L) als Master fungieren, wobei der zweite Umwandler (62R) und das zweite Steuerungsmodul (100R, 102R, 106R, 112R) als Sklaven fungieren und dadurch, dass die Architektur so konfiguriert ist, dass der zweite Umwandler (62R) und das zweite Steuerungsmodul (100R, 102R, 106R, 112R) bei der gemeinsamen Versorgung der zweiten elektrischen Maschine (24R) als Master fungieren, wobei der erste Umwandler (62L) und das erste Steuerungsmodul (100L, 102L, 106L, 112L) als Sklaven fungieren.

7. Elektrische Architektur nach einem der vorhergehenden Ansprüche, **dadurch gekennzeichnet, dass** sie eine Leistungs-Hilfsgruppe (APU) und eine elektrische Maschine (74) für das Anlassen der Leistungs-Hilfsgruppe (APU) umfasst, und dadurch, dass die elektrische Architektur konfiguriert ist, damit die beiden Umwandler (62L, 62R) die elektrische Maschine (74) für das Anlassen der Leistungs-Hilfsgruppe (APU) versorgen können.

8. Elektrische Architektur nach Anspruch 7, **dadurch gekennzeichnet, dass** sie mindestens eine Batterie (70L, 70R) zur Speicherung von elektrischer Energie umfasst, und dadurch, dass die elektrische Maschine (74) für das Anlassen der Leistungs-Hilfsgruppe (APU) durch die Batterie (70L, 70R) über die Umwandler (62L, 62R) versorgt wird.

9. Luftfahrzeug, umfassend eine elektrische Architektur nach einem der vorhergehenden Ansprüche.

10. Betriebsverfahren einer elektrischen Architektur nach Anspruch 5, wobei die erste und die zweite elektrische Maschine (24L, 24R) konfiguriert sind, um einen Motor- oder einen Generatorbetrieb zu ermöglichen, welcher es ermöglicht, die beiden Umwandler (62L, 62R) zu versorgen, wobei das Verfahren **dadurch gekennzeichnet ist, dass** es darin besteht, die erste elektrische Maschine (24L) zu versorgen, welche im Motorbetrieb zum Anlassen des ersten Hauptmotors (42L) arbeitet, bis die erste elektrische Maschine (24L) im Generatorbetrieb arbeitet, wobei sie mechanische Energie vom ersten Hauptmotor (42L) empfängt, wobei die erste elektrische Maschine (24L) daraufhin die beiden Umwandler (62L, 62R) versorgt, und dadurch, dass das Verfahren anschließend darin besteht, die zweite elektrische Maschine (24R) zu versorgen, welche im Motorbetrieb arbeitet, um den zweiten Hauptmotor (42R) anzulassen.

11. Verfahren nach Anspruch 10 zum Betrieb einer elektrischen Architektur nach den Ansprüchen 5 bis 8, wobei die elektrische Maschine (74) zum Anlassen der Leistungs-Hilfsgruppe (APU) konfiguriert ist, um einen Motor- oder einen Generatorbetrieb zu ermöglichen, welcher es ermöglicht, die beiden Umwandler (62L, 62R) zu versorgen, **dadurch gekennzeichnet, dass** es darin besteht, die elektrische Maschine (74) zum Anlassen der Leistungs-Hilfsgruppe (APU) zu versorgen, welche im Motorbetrieb arbeitet, um die Leistungs-Hilfsgruppe (APU) anhand der Batterie (70L, 70R) zu versorgen, bis die elektrische Maschine (74) zum Anlassen der Leistungs-Hilfsgruppe (APU), welche mechanische Energie von der Leistungs-Hilfsgruppe (APU) empfängt, im Generatorbetrieb arbeitet, um die beiden Umwandler (62L, 62R) zu versorgen, und dadurch, dass das Verfahren anschließend darin besteht, die erste elektrische Maschine (24L) zu versorgen, welche im Motorbetrieb arbeitet, um den ersten Hauptmotor (42L) anzulassen.

12. Verfahren nach Anspruch 11 zum Betrieb einer elektrischen Architektur nach den Ansprüchen 4 bis 8, **dadurch gekennzeichnet, dass** es darin besteht, den Elektromotor (76) zum Antrieb eines Rades (78) des Luftfahrzeugs nach dem Anlassen der Leistungs-Hilfsgruppe (APU) und vor dem Anlassen des ersten Hauptmotors (42L) durch die erste elektrische Maschine (24L) zu versorgen.

## Claims

1. An electrical architecture for an aircraft comprising two air-conditioning systems (12, 14), two converters (16, 18; 46, 48; 62L, 62R), each intended to power one of the air-conditioning systems (12, 14), and comprising at least one first electric machine (24; 24L) which starts up a first main engine (42; 42L) of the aircraft, and wherein each of the two converters (16, 18; 46, 48; 62L, 62R) comprises two inverters (26, 28, 38, 40; 50, 52, 54, 56; 64L, 66L, 64R, 66R), **characterized in that** the electrical architecture (10; 47; 60) is configured such that the two converters (16, 18; 46, 48; 62L, 62R) can together power the first electric machine (24; 24L), **in that** the electrical architecture (10; 47; 60) further comprises a coupler (43) for linking at least two first of the inverters, and **in that** the electric machine (24) comprises a main winding (24-1) that can be powered by the coupler (43) and an exciter winding (24-2) that can be powered by a second one of the inverters.

2. The electrical architecture according to claim 1, **characterized in that**, below a predetermined altitude, the two converters (16, 18; 46, 48; 62L, 62R) are configured to only power one of the two air-conditioning systems (12, 14).

3. The electrical architecture according to one of the preceding claims, **characterized in that** an inverter of each converter (16, 18; 46, 48; 62L, 62R) is configured to power an air recirculation fan (44, 45).

4. The electrical architecture according to one of the preceding claims, **characterized in that** an inverter (64L) of at least one of the converters (62L) is configured to power an electric motor (76) for powering a wheel (78) of the aircraft.

5. The electrical architecture according to one of the preceding claims, **characterized in that** it further comprises a second electric machine (24R) that starts up a second main engine (42R) of the aircraft, and **in that** the electrical architecture (60) is configured such that the two converters (62L, 62R) can together power the first electric machine (24L) or the second electric machine (24R).

6. The electrical architecture according to claim 5, **characterized in that** the architecture comprises a first driver module (100L, 102L, 106L, 112L) associated with a first one of the two converters (62L), a second driver module (100R, 102R, 106R, 112R) associated with a second one of the two converters (62R) and a bus (120) connecting the first and second driver modules, **in that** the architecture is configured to make the first converter (62L) and the first driver module (100L, 102L, 106L, 112L) masters during combined powering of the first electric machine (24L), the second converter (62R) and the second driver module (100R, 102R, 106R, 112R) being slaves, and **in that** the architecture is configured so as to make the second converter (62R) and the second driver module (100R, 102R, 106R, 112R) masters during combined powering of the second electric machine (24R), the first converter (62L) and the first driver module (100L, 102L, 106L, 112L) being slaves.

7. The electrical architecture according to one of the preceding claims, **characterized in that** it comprises an auxiliary power unit (APU) and an electric machine (74) for starting up the auxiliary power unit (APU), and **in that** the electrical architecture is configured such that the two converters (62L, 62R) can power the electric machine (74) for starting up the auxiliary power unit (APU).

8. The electrical architecture according to claim 7, **characterized in that** it comprises at least one battery (70L, 70R) for storing electrical energy, and **in that** the electric machine (74) for starting up the auxiliary power unit (APU) is powered by the battery (70L, 70R) via the converters (62L, 62R).

9. An aircraft comprising an electrical architecture according to one of the preceding claims.

10. A method for operating an electrical architecture according to claim 5, wherein the first and second electric machines (24L, 24R) are configured so as to allow operation as a motor or as a generator, making it possible to power the two converters (62L, 62R), the method being **characterized in that** it consists in powering the first electric machine (24L) operating as a motor to start up the first main engine (42L) until the first electric machine (24L) operates as a generator, receiving mechanical energy from the first main engine (42L), the first electric machine (24L) then powering the two converters (62L, 62R), **in that** the method then consists in powering the second electric machine (24R) operating as a motor in order to start up the second main engine (42R).

11. The method according to claim 10 for operating an electrical architecture according to claims 5 to 8, wherein the electric machine (74) for starting up the auxiliary power unit (APU) is configured to allow operation as a motor or as a generator, making it possible to power the two converters (62L, 62R), **characterized in that** it consists in powering the electric machine (74) for starting up the auxiliary power unit (APU) operating as a motor in order to start up the auxiliary power unit (APU) from the battery (70L, 70R) until the electric machine (74) for starting up the auxiliary power unit (APU) receiving mechanical energy from the auxiliary power unit (APU), operates as a generator to power the two converters (62L, 62R), **in that** the method then consists in powering the first electric machine (24L) operating as a motor in order to start up the first main engine (42L).

12. The method according to claim 11 for operating an electrical architecture according to claims 4 to 8, **characterized in that** it consists in powering the electric motor (76) for driving a wheel (78) of the aircraft after the auxiliary power unit (APU) has been started up and before starting up of the first main engine (42L) by the first electric machine (24L).
